# EUROPEAN PATENT APPLICATION

(11) **EP 4 840 304 A1**
(43) Date of publication of application: **18.11.2026**
(21) Application number: 26176297.5
(22) Date of filing: 04.05.2026
(51) Int. Cl.: A01K 63/04

(54) **METHOD FOR DETECTING A CLOGGED CONDITION OF A FILTERING UNIT FOR AN AQUARIUM TANK AND FILTERING UNIT CONFIGURED TO IMPLEMENT SAID METHOD**

(30) Priority: 12.05.2025 IT 202500010632
(71) Applicant: Askoll Holding S.r.l., 36031 Dueville (VI) (IT)
(72) Inventor: MARIONI, Elio, deceased (IT)
(74) Representative: Botti & Ferrari S.p.A.

(57) **Abstract**

A method for detecting a clogged condition of a filtering unit for an aquarium tank, said filtering unit comprising an inlet configured, an outlet, a centrifugal pump actuated by an electric motor for moving said liquid between said inlet and said outlet and at least one filtering device interposed between said inlet and said outlet, said method comprising the steps of:
- controlling, through a control logic unit, said electric motor by imposing a voltage on the windings;
- acquiring an indicative value of the rotation frequency (fᵢ) of said centrifugal pump;
- identifying a possible clogged condition of the at least one filtering device based on the acquired indicative value of the rotation frequency (fᵢ);
- signalling said clogged condition to a user.

## Description

### Field of application

The present invention relates to a method for detecting the clogging of a filtering unit for an aquarium tank.

The present invention also relates to a filtering unit arranged to implement the above method.

In greater detail, the invention relates to a method and to a filtering unit for an aquarium tank particularly designed and manufactured to ensure an optimum operation and to provide a timely signalling of possible failures in the operation of the filtering unit and thus of the aquarium to the user, during the normal operation of the aquarium.

The invention finds in particular a useful application in aquariology, applying firstly to home aquariums.

### Prior art

It is currently known that aquariums comprise a tank, filled with liquid in which fish and/or other organisms live and a filtering unit used to clean the liquid which is present in the tank.

The filtering unit forces the liquid to flow through at least one filtering body located inside the filtering unit container.

The filtering unit according to the prior art further comprise at least one pump and a motor, in particular a synchronous motor, that is capable of allowing the rotation of the pump impeller.

A disadvantage of these known filtering units is the tendency of the mechanical filter to clog following the continuous work of filtering the aquarium water.

During the normal water recirculation through the filtering unit, the at least one filter contained in the same filtering unit, the mechanical filter typically accumulates impurities and solids such as for instance organic debris, food residues, fish waste products, or the like.

The accumulation of these solid impurities causes the progressive clogging mainly of the mechanical filter, resulting in a progressive reduction in the flow rate of liquid circulating in the filtering unit, up to the complete stop. This compromises water circulation, which is essential for distributing oxygen and nutrients, as well as the efficiency of mechanical, biological and chemical filtration.

For the detection of the partial or complete clogged condition, the user must regularly inspect the water recirculation condition, to promptly intervene with cleaning or replacement of the filtering elements.

A late user intervention may involve sometimes serious repercussions on ecosystem conditions inside the aquarium tank.

In view of the disadvantages and problems unsolved by the state of the art, the object of the present invention is to provide a method for detecting the clogged condition of a filtering unit for an aquarium and to manufacture an aquarium comprising the filtering unit, which is capable of detecting partial or complete clogging conditions of the filtering unit itself.

A further object of the present invention is to provide a method for detecting the clogged condition of a filtering unit for an aquarium and to manufacture an aquarium comprising the filtering unit, which is able to suddenly signal possible blocks to the user, so as to allow him to immediately intervene.

Therefore, the technical problem underlying the present invention is to provide a method for detecting a clogged condition of a filtering unit for an aquarium that allows the clogging of the filtering unit to be effectively and automatically detected.

### Summary of the invention

The above-identified technical problem is solved by a method for detecting a clogged condition of a filtering unit for an aquarium tank, said filtering unit comprising an inlet configured to receive a liquid from said aquarium tank, an outlet configured to reintroduce the liquid into said aquarium tank, a pump actuated by an electric motor, preferably a brushless one, for moving said liquid between said inlet and said outlet and at least one filtering device interposed between said inlet and said outlet, said method comprising the steps of:
- controlling said electric motor by imposing a supply voltage on its windings;
- after the electric motor and the pump associated thereto have reached a balance point based on the associated hydraulic circuit, acquiring an indicative value of the rotation frequency of said centrifugal pump;
- identifying a possible clogged condition of the at least one filtering device based on the indicative value of the rotation frequency;
- signalling said clogged condition to a user.

In fact, the present invention stems from the observation that the hydraulic load progressively decreases as the filter clogs, producing thereby an acceleration of the electric pump.

It should be noted that the above-identified method may be continuously implemented during the filtering unit operation, driving the pump at a constant reference voltage and monitoring the rotation frequency over time.

On the other hand, the method may also be implemented only at certain times, for instance on a constant daily basis. In the remaining time the pump may be thereby controlled according to different logics.

The indicative value of the pump rotation frequency may be for instance the rotation frequency of the electric motor rotor that, in the typical case of a direct-drive centrifugal pump, exactly correspond to the pump rotation frequency. This value may be acquired through a position sensor, for instance a Hall sensor, that counts the rotor rotations per time unit.

According to the simplest and most immediate embodiment, the clogged condition may be identified when a threshold value is exceeded by the rotation frequency of the centrifugal pump, that is, in the direct drive case, of the electric motor. In this case, the control logic unit considers the filtering unit as clogged if and only if said threshold value is exceeded.

On the other hand, more sophisticated methods may be provided, in which the rotation frequency is used to evaluate a clogging degree of the filtering unit. In this case, the clogging may be evaluated based on the deviation from a rotation frequency value measured with a clean filter. The user may thus be provided with a signal modulated with respect to the actual filter clogging degree, for instance by progressively turning on different LED lights or by displaying a numerical parameter. In this embodiment, exceeding the threshold value may be however monitored to send an alarm signal to the user, being it indicative of a critical clogging degree that requires a timely action for replacing or cleaning filters.

The threshold value for the rotation frequency may be empirically identified through preliminary tests on the filter. Optionally, it may be set and/or modified by the user based on the needs and/or preferences thereof: for instance, a lower threshold value may be set in case of particularly vulnerable aquatic fauna.

Preferably, a maximum allowable rotation frequency, that is higher than the above-mentioned threshold value, is also set on the control logic unit, to protect the application.

Upon detection of a clogged condition, in particular of a critical clogged condition identified by exceeding the threshold value, an acoustic and/or visual alarm signal may be emitted.

The acoustic and/or visual alarm signal may be emitted by signalling means directly on the filtering unit. As an alternative or in combination, the alarm signal may be emitted by a remote device, for instance a smartphone, wirelessly connected to said control logic unit.

The method may comprise a step of forwarding a signal relating to the clogged condition from said control logic unit to a remote device, for instance a smartphone, through wireless communication. The sent signal may be a binary signal, that identifies only when the threshold value is reached to send an alarm, or as an alternative a more complete signal that allows as mentioned above the filter clogging degree to be monitored.

Preferably, said electric motor is a BLDC motor. Preferably, the BLDC motor is actuated according to a PWM logic. In the step of imposing a supply voltage on the motor windings, a specific control duty cycle (for instance 100%) is imposed on the integrated circuit, such a duty cycle being transferred to the winding.

The above-identified technical problem is also solved by a filtering unit for an aquarium tank comprising an inlet configured to receive a liquid from said aquarium tank, an outlet configured to reintroduce the liquid into said aquarium tank, a centrifugal pump actuated by an electric motor for moving said liquid between said inlet and said outlet, at least one filtering device interposed between said inlet and said outlet; means for detecting a rotation frequency of said electric motor; and a control logic unit configured to actuate said electric motor; wherein said control logic unit is also configured to identify a possible clogged condition of the at least one filtering device based on the detected value of the rotation frequency and to signal said clogged condition to a user.

Said filtering unit may be configured to implement the method according to any one of the above-mentioned alternatives.

Said filtering unit may further comprise means for visual and/or acoustic signalling of the clogged condition, for instance one or more LEDs or buzzers.

Said filtering unit may also comprise wireless transmission means of a signal relating to the clogged condition from said control logic unit to a remote device, for instance via the Bluetooth^{™} technology.

Further features and advantages of the present invention will be more apparent from the following description of an embodiment thereof with reference to the attached drawings, given by way of non-limiting examples.

### Brief description of the drawings

In the drawings
- figure 1 shows a perspective view, partially sectioned to show an inner path, of the filtering unit covered by the present invention;
- figure 2 shows a different partially sectioned perspective view of the filtering unit, covered by the present invention;
- figure 3 shows a block diagram of the method for detecting a clogged condition of the filtering unit, covered by the present invention;
- figure 4 shows a diagram of the trend of quantities that control the operation of the filtering unit, covered by the present invention;
- figure 5 shows a front view of the filtering unit and of the aquarium comprising the filtering unit itself, in a first operating mode;
- figure 6 shows a front view of the filtering unit and of the aquarium comprising the filtering unit itself, in a second operating mode;
- figure 7 shows a front view of the filtering unit and of the aquarium comprising the filtering unit itself, in a third operating mode;
- figure 8 shows a front view of the filtering unit and of the aquarium comprising the filtering unit itself, in a fourth operating mode.

### Detailed description

Referring to the attached figures, a filtering unit for an aquarium tank A, covered by the present invention is indicated with reference 1.

The aquarium tank A is normally filled with a liquid, generally water, in which fish and other organisms live.

In particular, the specific embodiment described with reference to the figures relates to an external filtering unit 1 for home aquariums, thus connected to the aquarium tank A by hydraulic fittings, not shown in the figures.

Without departing from the scope of protection of the present invention, the filtering unit 1 may also be arranged inside the aquarium tank A or be external and arranged on one of the internal walls of the aquarium tank A, creating a configuration known as hang-on-back configuration.

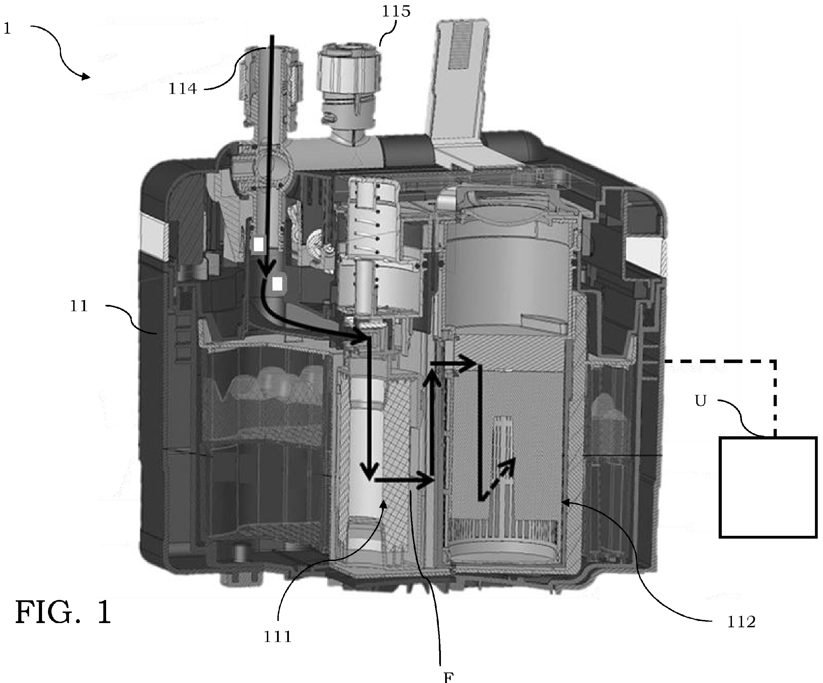

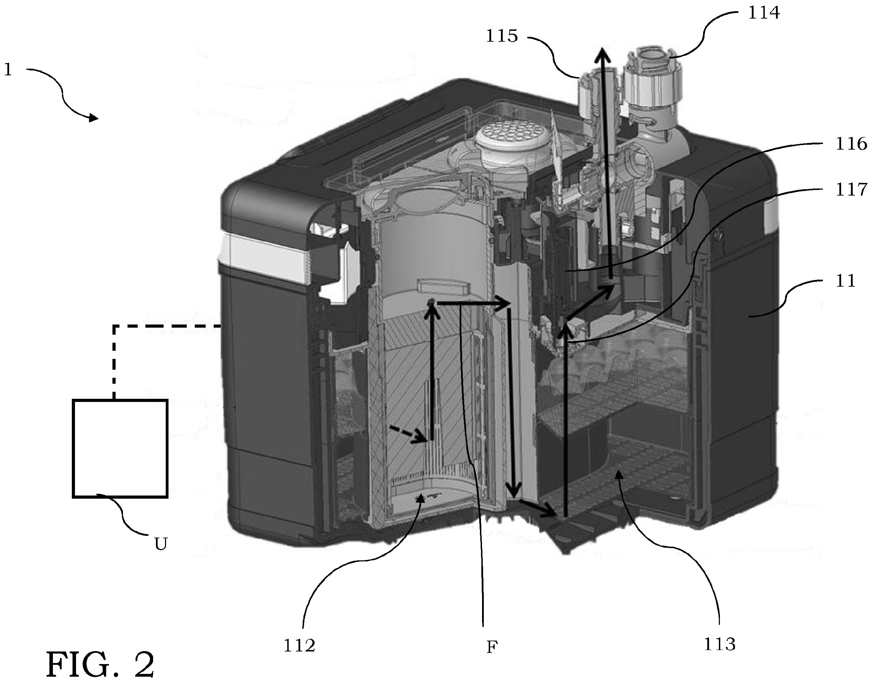

Referring in particular to figures 1 and 2, the filtering unit 1 comprises a container 11, substantially shaped as a square-based parallelepiped and containing therein a plurality of filtering devices, being mechanical, chemical and biological respectively, arranged in series along a fluid path inside the container 11.

In particular, the filtering device of the mechanical type 111 comprises a wool or synthetic material sponge, that is capable of intercepting the coarsest impurities which are present in the liquid passing through the filtering unit 1.

The filtering device of the chemical type 112 is usually an activated carbon and is capable of absorbing harmful elements, removing them from the filtered liquid.

The filtering device of the biological type 113 comprises a bed of cylinders, that is cylinders made of ceramic material designed to be colonized by bacteria, that perform in turn the real liquid purification by transforming the waste substances generated by the organisms which are present in the aquarium A into harmless compounds.

On top of the container 11 there is an inlet duct 114 to allow the liquid from the aquarium tank A to enter the filtering unit 1 and an outlet duct 115 to allow the liquid to exit the filtering unit 1 and be reintroduced into the aquarium tank A, passing through a fluid path F, through which the liquid passes through the filtering devices and is filtered.

Said filtering unit 1 comprises a control logic unit U, that is capable of coordinating the operation of the unit itself.

Furthermore, operating parameter ranges of the filtering unit 1 are set in the control logic unit U, as will be described in detail below.

The filtering unit 1 also comprises a centrifugal pump 117, designed to suck the liquid from the aquarium tank A, convey it through the liquid path F and reintroduce it into the tank.

In particular, the centrifugal pump 117 is directly actuated by a BLDC electric motor 116 which is capable of operating at a variable speed, as will be described in detail below.

The variable-speed electric motor 116 is able to operate at different speeds, allowing a precise control and a better energy efficiency.

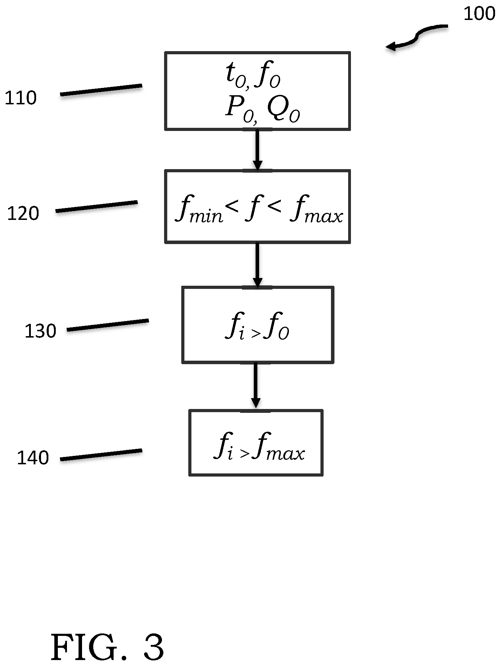

Referring to figure 3, in operation, said filtering unit 1 is controlled according to the following operating method 100.

The control of the electric motor 116 is performed through a PWM (Pulse Width Modulation) signal, so as to regulate the phase angle and the speed of the electric motor itself, by modifying the duty cycle at the motor driver inputs.

The control logic unit U is configured to detect the clogging of the filtering devices 111, 112 and 113, in particular of the mechanical filtering device 111, and to emit an alarm signal for a user.

In particular, in an initial step 110, the electric motor starts to operate at a reference torque value t₀ and at an expected rotation frequency value f₀, that corresponds to a rotation frequency with completely clean filters.

In an embodiment the expected rotation frequency value f₀ may be equal, by simple way of example, to 50 Hz.

Said initial values of reference torque t₀ and expected rotation frequency f₀ correspond to an electrical power value P₀. Under these initial conditions, a flow rate Q₀ is thus obtained, which is useful to ensure the well-being of the aquarium tank A ecosystem.

During operation, in an intermediate step 120 or control step, the electric motor is controlled by imposing a supply voltage on the windings. The motor thus seeks to operate at a balance point with respect to the hydraulic system, and the motor rotation frequency f₀ is expected to be in a predetermined range fₘᵢₙ - fₘₐₓ.

The predetermined range is approximately 45 - 55 Hz, therefore fₘᵢₙ = 45 Hz and fₘₐₓ = 55 Hz.

The control logic unit U monitors the rotation frequency value fᵢ of the electric motor 116, that corresponds to the rotation speed of the centrifugal pump 117. Monitoring is preferably performed by using a Hall sensor, according to per se known modes.

During the operation of the centrifugal pump 117, in a clogging step 130, the progressive clogging of one or more filtering devices, typically of the mechanical filter 111, normally occurs. The progressive clogging of the filter causes a subsequent decrease in the fluid flow rate Qᵢ, resulting in turn in a decrease in the hydraulic load. Operating against a lower hydraulic load, the electric motor 116 of the centrifugal pump 117 accelerates in step with the filter clogging. Therefore, the rotation frequency value fᵢ of the motor increases, reaching a higher value than the expected value f₀, such that fᵢ , f₀.

If the rotation frequency value fᵢ continues to increase to such an extent that it comes out of the predetermined range, so that f_{i >} fₘₐₓ occurs, the control logic unit U then signals the clogging of the filtering devices, through a clogging signal, in an alarm step 140. This allows the user of the aquarium A to be promptly informed about the clogging of the filtering devices so that the mechanical filtering device 111, which is generally responsible for such a clogging, can be replaced or cleaned.

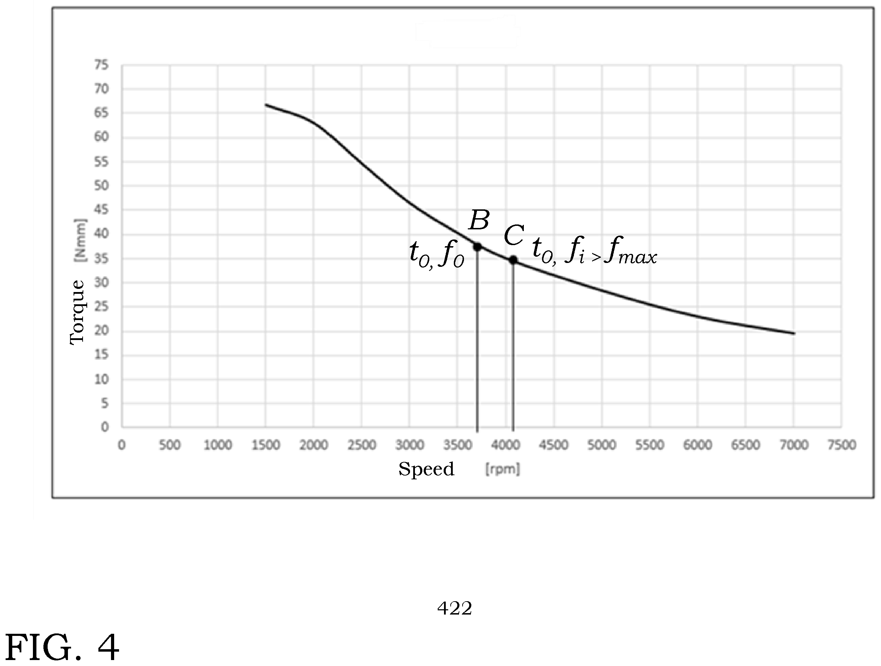

Figure 4 shows the torque-rotation speed curve of the electric motor 116, where point B represents an operating point of the electric motor 116 with clean filtering devices, and point C represents an operating point of the electric motor with clogged filtering devices. It should be noted that in this case angular speed values are illustrated which are different from the above-mentioned 50 Hz and 55 Hz; these values have however a merely indicative function.

The clogging signal may be forwarded to the operator according to different operating modes.

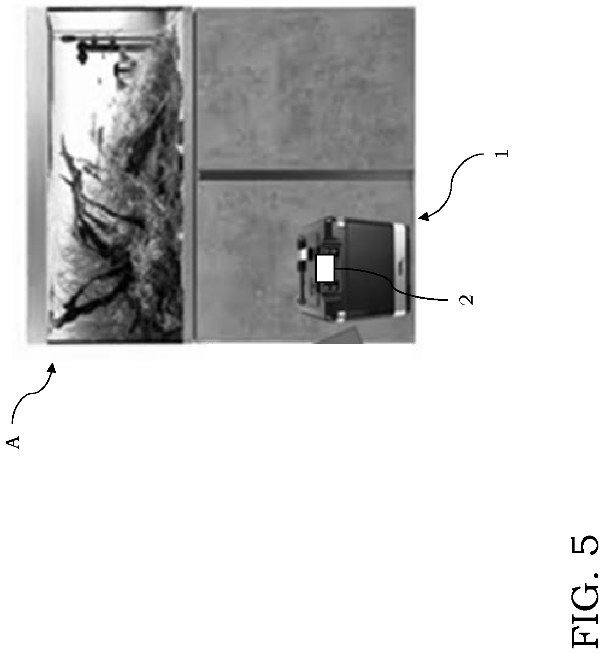

Referring to figure 5, in a first operating mode the clogging signal may be locally communicated, through visual and/or acoustic signalling means 2 installed on the filtering unit itself. Said signalling means may comprise, by way of non-limiting example, at least one display and/or LED and/or buzzer.

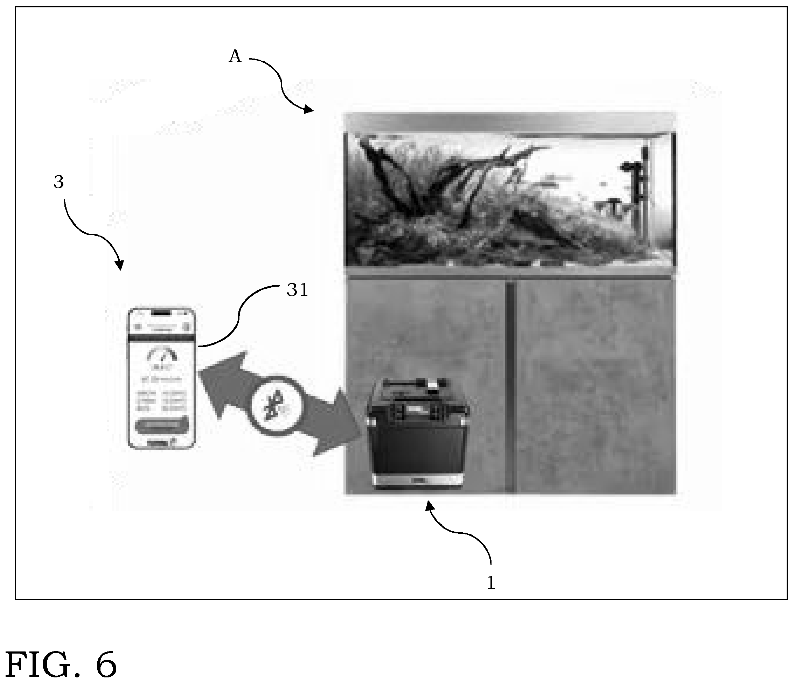

Referring to figure 6, in a second operating mode, said control logic unit U is able to wirelessly connect, for instance in Bluetooth^{™} mode, to at least one external device 3.

In particular, said at least one external device 3 is a phone 31 of the smartphone type or similar remote device.

In this mode, the signal is thus directly transmitted to the phone 31 from the control logic unit with Bluetooth^{™} function. This mode requires that the phone 31 is in proximity to the filtering unit.

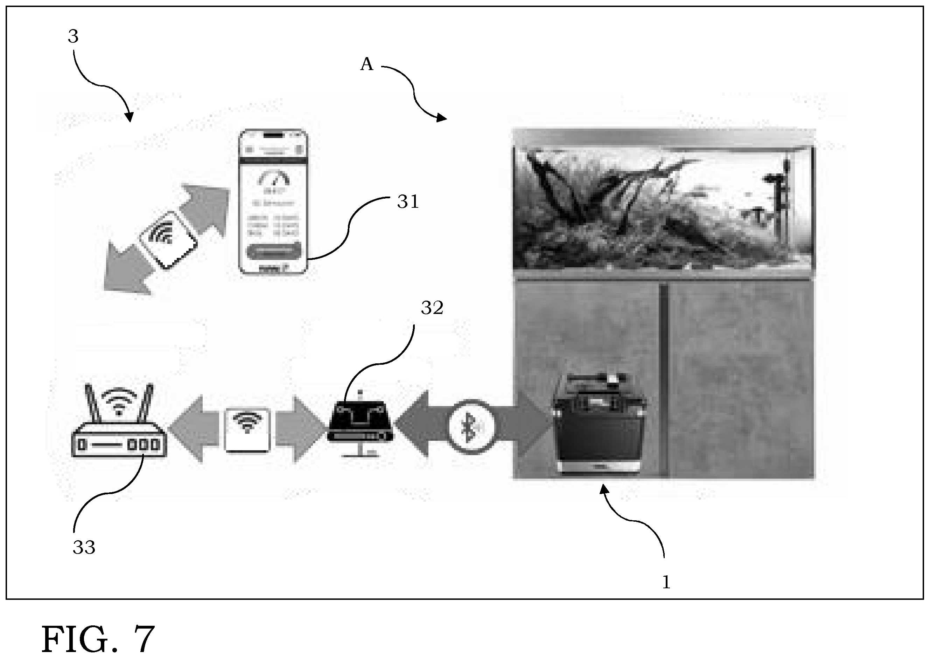

Referring to figure 7, in a third operating mode, said at least one external device 3 comprises a repeater 32, arranged close to the aquarium A and connected in Bluetooth^{™} mode thereto, a router 33, arranged in the same environment where the aquarium A is arranged, such as a home for instance, which is capable of wirelessly communicating with said repeater 32, and said phone 31, used by the user of the aquarium A in the same environment where the aquarium A is arranged, which is capable of wirelessly communicating with said router 33, in particular through a home Wi-Fi network. In this mode, said repeater 32 is capable of receiving Bluetooth^{™} signals emitted by said control logic unit U and retransmit them to the phone 31 using the home Wi-Fi network, through a generic Wi-Fi router 33.

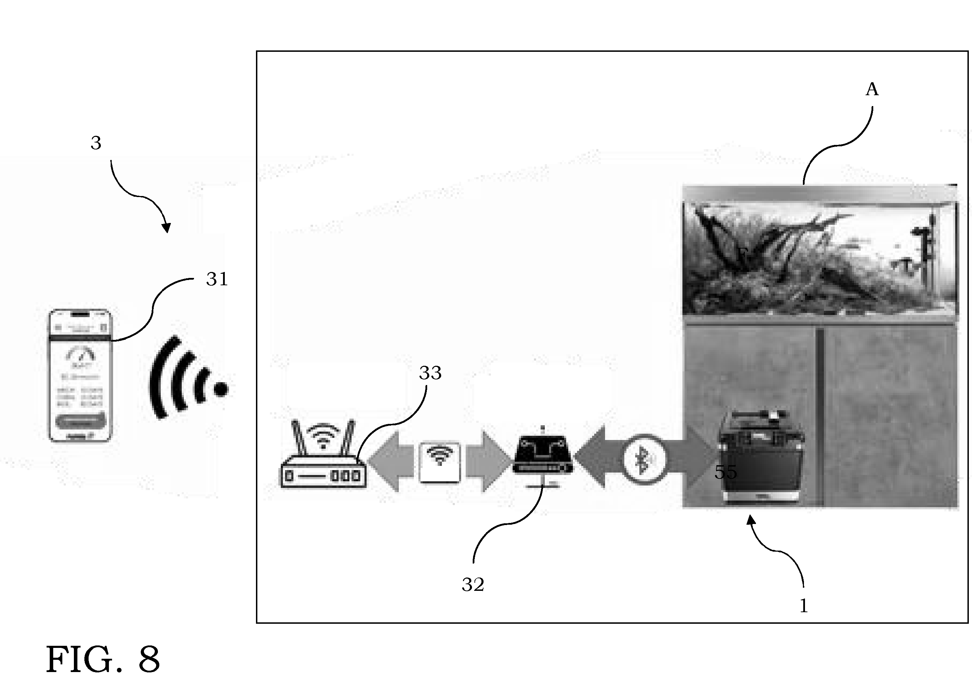

Referring to figure 8, in a fourth operating mode, the clogging signal is always transmitted first via the Bluetooth^{™} technology to the repeater 32, then via the Wi-Fi technology to the router 33. However, in this case the phone 31, used by the user of the aquarium A outside the environment where the aquarium A is arranged, receives the signal from the router 33 through an internet network.

The clogging signal may be notified in real time to the operator through a dedicated application on the phone 31 or similar remote device, alternatively or in combination with the direct signalling on the filtering unit 1 according to the first mode.

As mentioned above the clogging signal is communicated when a threshold frequency fₘₐₓ is exceeded. Said threshold frequency may be determined by the filter manufacturer, based on empirical tests.

However, it may also be provided that said threshold frequency fₘₐₓ is selected and/or modified by the operator depending on his own specific needs, for instance through the dedicated application on his phone 31 or directly on the filtering unit 1 through a user interface.

Furthermore, it should be noted that frequency monitoring may also be used to provide the user with a constant update of the progressive clogging status of the filter, allowing him to perform the replacement even in advance before reaching a critical condition identified by the threshold frequency fₘₐₓ. In this case, the method provides for the constant detection of the rotation frequency and the identification of a corresponding degree of filter saturation, which may be visually communicated through the dedicated application or directly on a dashboard of the filtering unit 1.

As is evident from the above-mentioned description, the advantage of the method for detecting a clogged condition of the filtering unit 1 and the aquarium covered by the present invention, lies in the possibility to detect the clogging of the filtering devices by controlling a direct-current motor and to promptly inform the aquarium owner about the need to clean or replace the filtering devices.

Obviously, in order to meet contingent and specific requirements, a person skilled in the art will be allowed to bring several modifications and alternatives to the above-described support, all however falling within the scope of protection of the invention as defined by the following claims.

## Claims

1. A method (100) for detecting a clogged condition of a filtering unit (1) for an aquarium tank (A), said filtering unit (1) comprising an inlet (114) configured to receive a liquid from said aquarium tank (A), an outlet (115) configured to reintroduce the liquid into said aquarium tank (A), a centrifugal pump (117) actuated by an electric motor (116) for moving said liquid between said inlet (114) and said outlet (115) and at least one filtering device (111, 112, 113) interposed between said inlet (114) and said outlet (115), said method comprising the steps of:
- controlling said electric motor (116) by imposing a supply voltage on its windings;
- acquiring an indicative value of the rotation frequency (f) of said centrifugal pump (117);
- identifying a possible clogged condition of the at least one filtering device (111, 112, 113) based on the acquired indicative value of the rotation frequency (f);
- signalling said clogged condition to a user.

2. The method (100) according to claim 1, wherein a clogged condition is identified if the acquired value indicates that the rotation frequency (f) is higher than a threshold value (fₘₐₓ).

3. The method (100) according to claim 2, wherein said threshold value (fₘₐₓ) is settable and/or modifiable by the user.

4. The method (100) according to one of claims 2 or 3, wherein, upon detection of the clogged condition, an acoustic and/or visual alarm signal is emitted.

5. The method (100) according to claim 4, wherein said acoustic and/or visual alarm signal is emitted by signalling means on the filtering unit (1) and/or by a remote device (31) wirelessly connected to said control logic unit (U).

6. The method (100) according to one of the preceding claims, further comprising a step of forwarding a signal relating to the clogged condition from said control logic unit (U) to a remote device (31), for instance a smartphone, through wireless communication.

7. The method (100) according to one of the preceding claims, wherein said electric motor (116) is an brushless electric motor, in particular a BLDC motor.

8. The method (100) according to one of the preceding claims, wherein the indicative value of the rotation frequency (f) is detected through a position sensor that acts on the rotor of the electric motor (116), for instance a Hall sensor.

9. A filtering unit (1) for an aquarium tank (A) comprising an inlet (114) configured to receive a liquid from said aquarium tank (A), an outlet (115) configured to reintroduce the liquid into said aquarium tank (A), a centrifugal pump (117) actuated by a brushless electric motor (116) for moving said liquid between said inlet (114) and said outlet (115), at least one filtering device (111, 112, 113) interposed between said inlet (114) and said outlet (115); means for detecting an indicative value of a rotation frequency (f) of said centrifugal pump (117); and a control logic unit (U) configured to actuate said electric motor (116); wherein said control logic unit (U) is also configured to identify a possible clogged condition of the at least one filtering device (111, 112, 113) based on the detected indicative value of the rotation frequency (f) and to signal said clogged condition to a user.

10. The filtering unit (1) for an aquarium tank (A) according to claim 9, further comprising means for visual and/or acoustic signalling of the clogged condition and/or wireless transmission means of a signal relating to the clogged condition from said control logic unit (U) to a remote device (31).
